# EUROPEAN PATENT APPLICATION

(11) **EP 4 369 489 A1**
(43) Date of publication of application: **15.05.2024**
(21) Application number: 23844519.1
(22) Date of filing: 15.08.2023
(51) Int. Cl.: H01M 50/244, H02B 1/46

(54) **BOX FOR ENERGY STORAGE DEVICE, ENERGY STORAGE DEVICE AND ENERGY STORAGE SYSTEM**

(30) Priority: 08.03.2023 CN 202310268425
(71) Applicant: Huawei Digital Power Technologies Co., Ltd., Shenzhen, Guangdong 518043 (CN)
(72) Inventor: WANG, Yongling, Shenzhen, Guangdong 518129 (CN); JIANG, Zhishun, Shenzhen, Guangdong 518129 (CN); ZHANG, Chuang, Shenzhen, Guangdong 518129 (CN); YU, Shijiang, Shenzhen, Guangdong 518129 (CN); LI, Malin, Shenzhen, Guangdong 518129 (CN)
(74) Representative: Huawei European IPR
(86) International application number: PCT/CN2023/113111
(87) International publication number: WO 2024/060885

(57) **Abstract**

This application provides a box for an energy storage apparatus, an energy storage apparatus, and an energy storage system. The box includes four columns, three side plates, a partition plate, a bottom plate, and a sealing door. The three side plates, the partition plate, and the bottom plate are fastened by the four columns and form a closed second accommodating region with the sealing door through enclosure, and the four columns and the partition plate form an open first accommodating region through enclosure. In the box provided in this application, a height of the partition plate is reduced to form the recessed open first accommodating region for accommodating an external assembly of the energy storage apparatus. This not only can improve heat dissipation efficiency of the energy storage apparatus, but also can ensure standardization of an overall size of the energy storage apparatus; and facilitate reducing space used for stacking of a plurality of energy storage apparatuses or an occupied area used for an adjacent arrangement, thereby increasing energy storage density of the energy storage system and reducing construction costs.

## Description

This application claims priority to Chinese Patent Application No.202310268425.X, filed with the China National Intellectual Property Administration on March 8, 2023, and entitled "BOX FOR ENERGY STORAGE APPARATUS, ENERGY STORAGE APPARATUS, AND ENERGY STORAGE SYSTEM", which is incorporated herein by reference in its entirety.

### TECHNICAL FIELD

This application relates to the field of electrochemical energy storage, and specifically relates to a box for an energy storage apparatus, an energy storage apparatus, and an energy storage system.

### BACKGROUND

A large quantity of electrochemical energy storage apparatuses usually need to be arranged in a centralized manner to construct an electrochemical energy storage power station. To facilitate a transportation and centralized arrangement, an existing energy storage apparatus usually uses a container as a carrier.

Boxes for some existing energy storage apparatuses use single-layer space. Electrical assemblies such as a battery module and a temperature control module, and a heat exchange assembly are all arranged in same space. Correspondingly, excessive heat inside the box for the energy storage apparatus is not conducive to heat dissipation and overall efficiency of the energy storage apparatus. In addition, a plurality of heat dissipation windows or communication windows need to be provided in the box. This is not conducive to safety protection such as dust prevention and waterproofing. A loadable capacity of the battery module is small.

In some existing energy storage apparatuses, the heat exchange assembly is mounted outside the box, and a volume of the energy storage apparatus in which the heat exchange assembly is mounted outside the box is greater than a volume of a standard container. However, a large quantity of energy storage apparatuses usually need to be arranged in an energy storage system in a centralized manner. As a result, an adjacent arrangement or up-down stacking of boxes for the energy storage apparatuses occupies larger space or a larger land area. Consequently, energy storage density of the energy storage system is reduced, and construction costs of the energy storage system are increased. This is not conducive to large-scale promotion of the electrochemical energy storage industry.

### SUMMARY

This application provides a box for an energy storage apparatus, an energy storage apparatus, and an energy storage system. An external assembly of the energy storage apparatus is accommodated in a recessed open first accommodating region, so that a heat dissipation capability and a safety protection capability of the energy storage apparatus can be improved, energy storage density of the energy storage system can be improved, and construction costs can be reduced.

According to a first aspect, this application provides a box for an energy storage apparatus. The box includes four columns, three side plates, a partition plate, a bottom plate, and a sealing door. The partition plate and the bottom plate are disposed opposite to each other in a height direction of the box, two of the side plates are disposed opposite to each other in a length direction of the box, and the other side plate and the sealing door are disposed opposite to each other in a width direction of the box. A height of each column is greater than a height of the partition plate in the height direction of the box. The three side plates, the partition plate, and the bottom plate are fastened by the four columns and form a closed second accommodating region with the sealing door through enclosure, and the four columns and the partition plate form an open first accommodating region through enclosure. The first accommodating region and the second accommodating region are arranged in a stacked manner in the height direction of the box. Two side plates. In the length direction of the box, a length of the first accommodating region or the second accommodating region is equal to a distance between the two side plates that are disposed opposite to each other in the length direction of the box, and in the height direction of the box, a distance between the partition plate and the bottom plate is less than a height of each of the columns.

The box provided in this application includes the open first accommodating region and the closed second accommodating region that are disposed in upper and lower layers, so that impact of heat of an assembly in the open first accommodating region on an assembly in the closed second accommodating region can be alleviated, thereby improving heat dissipation efficiency of the energy storage apparatus. In addition, in the box provided in this application, a height of the partition plate is reduced to form the recessed open first accommodating region for accommodating an external assembly of the energy storage apparatus. Compared with a box for the existing energy storage apparatus, this not only facilitates placement of the external assembly of the energy storage apparatus, but also can ensure standardization of an overall size of the box, and facilitates reducing space used for stacking of boxes or an occupied area used for an adjacent arrangement, thereby increasing energy storage density of the energy storage system and reducing construction costs.

In an implementation, the second accommodating region includes a first accommodating cavity and a second accommodating cavity. The first accommodating cavity and the second accommodating cavity are adjacently arranged in the length direction of the box. At least one of a height of the first accommodating cavity or a height of the second accommodating cavity is equal to the height of the second accommodating region in the height direction of the box.

Only the first accommodating cavity and the second accommodating cavity that are longitudinally adjacently arranged are provided in the second accommodating region in the box provided in this application. Compared with a manner in which a plurality of pieces of space are divided by a channel or an interstice in the box for the existing energy storage apparatus, not only space of the second accommodating region can be more fully used, but also arrangement and maintenance work in different cavities is facilitated, thereby reducing working time. For example, the first accommodating cavity is configured to accommodate a battery module, and the second accommodating cavity may be configured to accommodate a power module and a temperature control module. Correspondingly, the arrangement or maintenance work for the battery module in the first accommodating cavity and the arrangement or maintenance work for the power module and the temperature control module in the second accommodating cavity may be performed simultaneously without affecting each other, so as to improve arrangement and maintenance efficiency of the energy storage apparatus.

In an implementation, a volume of the first accommodating cavity is greater than a volume of the second accommodating cavity. A length of the first accommodating cavity is greater than a length of the second accommodating cavity in the length direction of the box, and a sum of the length of the first accommodating cavity and the length of the second accommodating cavity is equal to a length of the second accommodating region in the length direction of the box.

Only the first accommodating cavity and the second accommodating cavity that are longitudinally adjacently arranged are provided in the second accommodating region in the box provided in this application. Compared with a manner in which a plurality of pieces of space are divided by a channel or an interstice in the box for the existing energy storage apparatus, not only space of the second accommodating region can be more fully used, but also arrangement and maintenance work in different cavities is facilitated, thereby reducing working time. For example, the first accommodating cavity is configured to accommodate the battery module, and the second accommodating cavity may be configured to accommodate the power module and the temperature control module. Correspondingly, the arrangement or maintenance work for the battery module in the first accommodating cavity and the arrangement or maintenance work for the power module and the temperature control module in the second accommodating cavity may be performed simultaneously without affecting each other, so as to improve arrangement and maintenance efficiency of the energy storage apparatus.

In an implementation, the second accommodating region includes a plurality of battery racks, and the plurality of battery racks are sequentially adjacently arranged in the length direction of the box. Any two adjacent battery racks in the plurality of battery racks have a same spacing in the length direction of the box. The first or last battery rack in the plurality of battery racks in the length direction of the box is configured to separate the first accommodating cavity from the second accommodating cavity. A spacing between the first or last battery rack and a side plate adjacent to the first or last battery rack is equal to a spacing between two adjacent battery racks. A depth of each battery rack may be 1700 mm to 2200 mm.

In the box provided in this application, the first accommodating cavity and the second accommodating cavity are separated by the plurality of battery racks. Compared with a manner in which a plurality of pieces of space are separated by an isolation wall or interstice in the existing energy storage box, space of the second accommodating region can be more fully used, so as to increase a quantity of batteries that can be accommodated in the box. In addition, the first accommodating cavity and the second accommodating cavity are separated by the battery racks, and a battery may be further arranged in the second accommodating cavity. For example, the first accommodating cavity is configured to accommodate a battery, and the second accommodating cavity may be configured to accommodate the power module and the temperature control module. When the power module and the temperature control module occupy only a part of the second accommodating cavity, another part of the second accommodating cavity may alternatively be configured to arrange the battery. Correspondingly, compared with the box for the existing energy storage apparatus, the box provided in this application may accommodate more batteries.

In an implementation, there are at least two sealing doors, and the at least two sealing doors are arranged in the length direction of the box. One sealing door of the at least two sealing doors is configured to close the second accommodating cavity, and another sealing door of the at least two sealing doors is configured to close the first accommodating cavity.

In the box provided in this application, longitudinally opened sealing doors are respectively disposed in the first accommodating cavity and the second accommodating cavity. The first accommodating cavity and the second accommodating cavity may be separately arranged or maintained. Opening the sealing door of the first accommodating cavity or the second accommodating cavity does not affect an assembly accommodated in the other accommodating cavity, so that convenience of the maintenance work and a safety protection capability of the energy storage apparatus can be improved.

In an implementation, lengths, widths, and heights of the box and a standard container are the same. There are a plurality of specifications for the standard container. The box may be a standard container having any specification. For example, the length of the box is 6058 mm, the width of the box is 2438 mm, and the height of the box is 2438 mm to 4150 mm. The box provided in this application has a same size as the standard container body. This not only facilitates transportation of the energy storage apparatus, but also facilitates stacking or an adjacent arrangement of a plurality of boxes.

In an implementation, the height of each column is equal to the height of the standard container. In the box provided in this application, the height of the column is equal to the height of the standard container, and the height of the partition plate is less than the height of the column, so as to form the recessed first accommodating region. Even if the external assembly is accommodated in the first accommodating region, an overall height of the energy storage apparatus does not exceed the height of the standard container, so as to ensure standardization of a volume of the energy storage apparatus. In this case, space used for stacking of energy storage apparatuses or an occupied area used for an adjacent arrangement is reduced, so as to increase energy storage density of the energy storage system and reduce construction costs.

In an implementation, the box may include one or more stiffening beams. Each of the stiffening beams is parallel to the length direction or the width direction of the box. Each of the stiffening beams is configured to fixedly connect to two of the columns. Each of the stiffening beams is disposed above the partition plate in the height direction of the box. The one or more stiffening beams, the four columns, and the bottom plate form the first accommodating region through enclosure.

In the box provided in this application, the stiffening beam parallel to the width direction or the length direction of the box is disposed, so that overall structural strength of the box is improved, and an external assembly, such as a heat exchange assembly, accommodated in the first accommodating region can also be protected.

According to a second aspect, this application provides an energy storage apparatus. The energy storage apparatus includes a heat exchange assembly, an electrical assembly, and the box according to the first aspect and any one of the foregoing implementations. The first accommodating region is configured to accommodate the heat exchange assembly, and the second accommodating region is configured to accommodate the electrical assembly. The first accommodating region is located above the second accommodating region in a height direction of the box, and a height of the first accommodating region is less than a height of the second accommodating region. A height of the heat exchange assembly is less than or equal to the height of the first accommodating region in the height direction of the box.

In the energy storage apparatus in this application, the open first accommodating region is used to accommodate the heat exchange assembly having a relatively small size, and the closed second accommodating region is used to accommodate the electrical assembly, so that impact of heat of the heat exchange assembly on the electrical assembly is alleviated, thereby improving heat dissipation performance of the energy storage apparatus. In addition, in the energy storage apparatus provided in this application, the electrical assembly is accommodated in the closed second accommodating region, so that communication or maintenance windows in the box can be reduced, thereby improving a safety protection capability of the energy storage apparatus. In addition, in the energy storage apparatus provided in this application, the recessed open first accommodating region is provided to accommodate the heat exchange assembly. This not only facilitates external disposition of the heat exchange assembly, but also can ensure standardization of an overall size of the energy storage apparatus, and facilitates reducing space used for stacking of a plurality of energy storage apparatuses or an occupied area used for an adjacent arrangement, thereby increasing energy storage density of an energy storage system and reducing construction costs.

In an implementation, the electrical assembly includes a plurality of columns of battery modules, each column of battery modules includes the plurality of battery modules, and the plurality of battery modules in each column of battery modules are arranged in the first accommodating cavity in a stacked manner in the height direction of the box.

In the energy storage apparatus in this application, the plurality of battery modules in each column of battery modules are arranged in the first accommodating cavity in a centralized manner, so that space of the first accommodating region can be more fully used, a prefabrication rate of the energy storage apparatus can be improved, and maintenance work for the battery modules is facilitated.

In an implementation, the electrical assembly includes a power module and a temperature control module, and the power module and the temperature control module are arranged in the second accommodating cavity in a stacked manner in the height direction of the box.

In the energy storage apparatus in this application, the power module and the temperature control module are arranged in the second accommodating cavity in a centralized manner, so that space of the second accommodating region can be more fully used, a prefabrication rate of the energy storage apparatus can be improved, and maintenance work for the power module and the temperature control module is facilitated.

In an implementation, the partition plate includes a first communication hole and a second communication hole. The first communication hole is provided above the first accommodating cavity, and a heat exchange pipe of the heat exchange assembly runs through the first communication hole into the first accommodating cavity. The second communication hole is provided above the second accommodating cavity, and a connection cable between the heat exchange assembly and the temperature control module runs through the second communication hole.

In the energy storage apparatus provided in this application, the electrical assembly and the heat exchange assembly respectively communicate with the two communication holes of the partition plate, so that communication or maintenance windows of the side plates of the box can be reduced, thereby improving a safety protection capability of the energy storage apparatus.

In an implementation, a distance between an upper surface of a housing of the heat exchange assembly in the height direction of the box and the partition plate is equal to or less than the height of the first accommodating region, a distance between two side surfaces of the housing of the heat exchange assembly in a width direction of the box is equal to or less than a width of the first accommodating region, and a distance between two side surfaces of the housing of the heat exchange assembly in a length direction of the box is equal to or less than a length of the first accommodating region. Alternatively, a distance between the upper surface of the housing of the heat exchange assembly in the height direction of the box and a bottom of the box is equal to or less than a height of the box.

In the energy storage apparatus provided in this application, the recessed open first accommodating region is provided to accommodate the heat exchange assembly. This not only facilitates external disposition of the heat exchange assembly, but also can ensure that the heat exchange assembly is not exposed beyond an outer side or an upper side of the energy storage apparatus, and facilitates reducing space used for stacking of a plurality of energy storage apparatuses or an occupied area used for an adjacent arrangement, thereby increasing energy storage density of the energy storage system and reducing construction costs.

According to a third aspect, this application provides an energy storage system. The energy storage system includes a plurality of energy storage apparatuses according to the second aspect and any one of the foregoing implementations of the second aspect, and the heat exchange assembly of each of the energy storage apparatuses includes an air exhaust vent and an air intake vent. The air exhaust vent and the air intake vent of the heat exchange assembly are oriented toward a height direction of a box for the energy storage apparatus, the plurality of energy storage apparatuses are adjacently arranged in a length direction or a width direction of the box for the energy storage apparatus, and an interstice between boxes for two adjacent energy storage apparatuses is less than a length, a height, or a width of the heat exchange assembly. Alternatively, the air exhaust vent and the air intake vent of the heat exchange assembly are oriented toward a width direction or a length direction of a box for the energy storage apparatus, the plurality of energy storage apparatuses are arranged in a stacked manner in a height direction of the box for the energy storage apparatus, and an interstice between boxes for two adjacent energy storage apparatuses is less than a length, a height, or a width of the heat exchange assembly.

In the energy storage system provided in this application, the plurality of energy storage apparatuses use a recessed open first accommodating region to accommodate the heat exchange assembly, so that it can be ensured that the heat exchange assembly is not exposed beyond an outer side or an upper side of the energy storage apparatus, thereby reducing an interstice used for two or more energy storage apparatuses that are arranged in a stacked manner or adjacently, reducing space or an occupied area used for the energy storage system, increasing energy storage density of the energy storage system, and reducing construction costs.

In an implementation, the heat exchange assembly includes a housing and a heat exchange plate, and the housing is configured to accommodate the heat exchange plate. The air intake vent is provided on a side part of the housing in the length direction or the width direction of the box for the energy storage apparatus, and the heat exchange plate and the partition plate are disposed in an inclined manner. Alternatively, the air intake vent is provided on the top of the housing in the height direction of the box for the energy storage apparatus, and the heat exchange plate and the partition plate are disposed in parallel.

In heat exchange assemblies of the plurality of energy storage apparatuses in the energy storage system provided in this application, locations of the air intake vent and the air exhaust vent of the heat exchange assembly may be flexibly set based on a requirement of stacking or an adjacent arrangement, so as to facilitate box combination assembly of the energy storage apparatuses. In addition, in the heat exchange assemblies of the plurality of energy storage apparatuses in the energy storage system provided in this application, a relative location of the heat exchange plate and the partition plate may be correspondingly set, so as to improve heat dissipation capabilities of a single energy storage apparatus and an entire energy storage system.

In an implementation, a heat exchanger is a liquid cooling heat exchanger, and the liquid cooling heat exchanger is connected to a liquid cooling pipe of a battery module. Compared with air cooling, an airduct-free design can be implemented through liquid cooling in a second accommodating region in which the battery module is accommodated, so that space is saved to accommodate more batteries, thereby greatly reducing non-cell power consumption costs of the system.

In an implementation, a corner fitting structure is disposed at a corner of the box. The corner fitting structure is disposed to implement self-stacking transportation by sea, reduce sea transportation costs, and protect the box for the energy storage apparatus from being damaged during transportation.

### BRIEF DESCRIPTION OF DRAWINGS

FIG. 1 is a schematic diagram of a box according to an embodiment of this application;
FIG. 2 is another schematic diagram of a box according to an embodiment of this application;
FIG. 3 is another schematic diagram of a box according to an embodiment of this application;
FIG. 4 is another schematic diagram of a box according to an embodiment of this application;
FIG. 5 is a schematic diagram of an energy storage apparatus according to an embodiment of this application;
FIG. 6 is a schematic diagram of a structure of a battery module;
FIG. 7 is a schematic diagram of a heat exchange assembly in an energy storage apparatus according to an embodiment of this application;
FIG. 8 is a schematic diagram of another heat exchange assembly in an energy storage apparatus according to an embodiment of this application; and
FIG. 9 is a schematic diagram of an energy storage system according to an embodiment of this application.

### Reference numerals:

10: box; 01: first accommodating region; 02: second accommodating region; 021: first accommodating cavity; 022: second accommodating cavity;
11: bottom plate; 12: side plate; 13: sealing door; 14: partition plate; 15: battery rack; 16: corner fitting structure; 121: first side plate; 122: second side plate; 123: third side plate; 131: spacing column; 132: column; 141: first communication hole; 142: second communication hole;
133: stiffening beam; 134: first stiffening beam; 135: second stiffening beam; 136: beam; 137: auxiliary stiffening beam;
20: battery module; 30: heat exchange assembly; 40: power module; 50: temperature control module;
31: housing; 311: top of a housing; 312: side part of a housing; 313: side part of a housing; 32: cooling module; 33: heat exchange plate; 34: air intake vent; 35: air exhaust vent.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. As used in the specification and appended claims of this application, singular expressions "one", "a", "the foregoing", "the", and "the one" are intended to further include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The length, width, height, and other data described or limited in the implementations of this application and the cases such as being vertical, parallel, equal to, greater than, or less than should be understood as complying with values or cases within an engineering measurement error range.

An energy storage apparatus in an energy storage system in an industrial and commercial energy storage scenario and a power station energy storage scenario usually includes a box, a battery module, and a heat exchange assembly. The box for the existing energy storage apparatus generally includes only a single accommodating space. If the heat exchange assembly is disposed inside the box, heat inside the box increases, and a communication window needs to be provided in the box, affecting heat dissipation performance and a safety protection capability of the energy storage apparatus. If the heat exchange assembly is disposed outside the box, an area occupied by a single energy storage apparatus is increased, and an overall size of each energy storage apparatus is not unified. This is not conducive to a centralized arrangement of a plurality of energy storage apparatuses.

To resolve the foregoing problem, embodiments of this application provide a box for an energy storage apparatus, an energy storage apparatus, and an energy storage system. An external assembly of the energy storage apparatus is accommodated in a recessed open first accommodating region, so that a heat dissipation capability and a safety protection capability of the energy storage apparatus can be improved, energy storage density of the energy storage system can be improved, and construction costs can be reduced.

The energy storage apparatus provided in embodiments of this application includes a box 10, an electrical assembly, and a heat exchange assembly 30. The electrical assembly includes a plurality of battery modules 20, a power module 40, and a temperature control module 50. The battery module 20 is configured to charge or discharge. The heat exchange assembly 30 is configured to dissipate heat for the energy storage apparatus. The power module 40 is configured to: charge the battery module 20 by using an external power supply, or receive discharge of the battery module 20 to supply power to a load. The temperature module 50 is configured to control, based on a heat generation condition of the energy storage apparatus, the heat exchange assembly 30 to dissipate heat for the energy storage module.

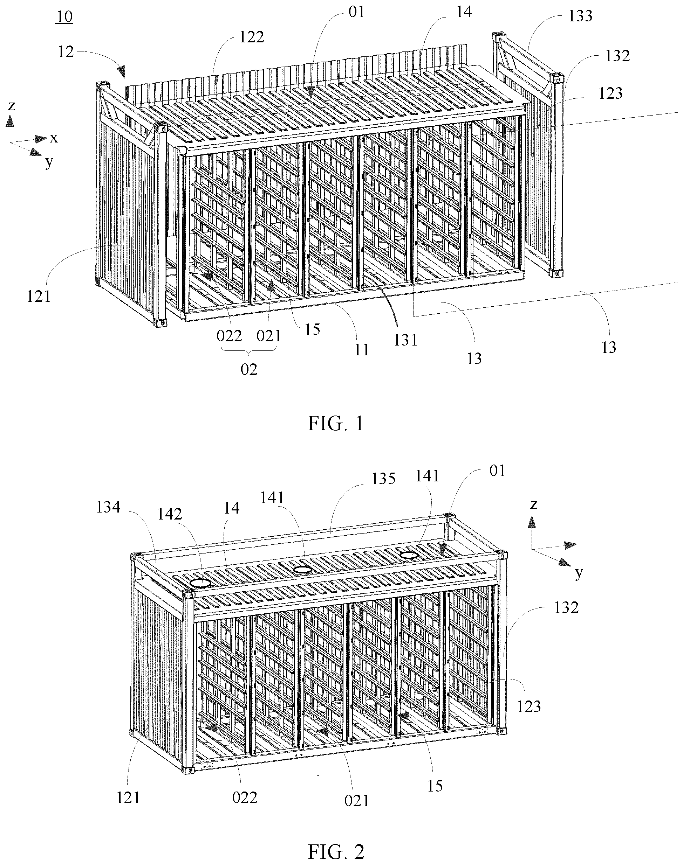

FIG. 1 is a schematic diagram of a box according to an embodiment of this application. As shown in FIG. 1, a box 10 includes a bottom plate 11, three side plates 12, a sealing door 13, a partition plate 14, and four columns 132. The partition plate 14 and the bottom plate 11 are disposed opposite to each other in a height direction of the box 10. Two side plates 12 are disposed opposite to each other in a length direction of the box 10, and the other side plate 12 and the sealing door 13 are disposed opposite to each other in a width direction of the box 10.

In this embodiment of this application, the four columns 132 and the partition plate 14 form an open first accommodating region 01 through enclosure, and the three side plates 12, the partition plate 14, and the bottom plate 11 are fastened by the four columns 132 and form a closed second accommodating region 02 with the sealing door 13 through enclosure. The first accommodating region 01 and the second accommodating region 02 are arranged in a stacked manner in the height direction of the box 10.

In this embodiment of this application, in the length direction of the box 10, a length of the first accommodating region 01 or the second accommodating region 02 is equal to a distance between the two side plates 12 that are disposed opposite to each other in the length direction of the box 10, and in the height direction of the box 10, a distance between the partition plate 14 and the bottom plate 11 is less than a height of each column 132.

In this embodiment of this application, the height of each column 132 in the height direction of the box 10 is greater than a height of the partition plate 14. The height of each column 132 is greater than a height of the first accommodating region 01 or a height of the second accommodating region 02 in the height direction of the box 10. Alternatively, the height of each column 132 is greater than a sum of the height of the first accommodating region 01 and the height of the second accommodating region 02 in the height direction of the box 10.

In this embodiment of this application, the first accommodating region 01 is configured to accommodate the heat exchange assembly 30, and the second accommodating region 02 is configured to accommodate the electrical assembly.

The box 10 provided in this embodiment of this application includes the open first accommodating region 01 and the closed second accommodating region 02 that are disposed in upper and lower layers, so that impact of heat of an external assembly in the open first accommodating region 01 on the closed second accommodating region 02 can be alleviated, thereby improving heat dissipation efficiency of the energy storage apparatus. In addition, in the box 10 provided in this application, a height of the partition plate 14 is reduced to form the recessed open first accommodating region 01 for accommodating the external assembly of the energy storage apparatus. Compared with a box for the existing energy storage apparatus, this not only facilitates placement of the external assembly of the energy storage apparatus, but also can ensure standardization of an overall size of the energy storage apparatus, and facilitates reducing space used for stacking of boxes or an occupied area used for an adjacent arrangement, thereby increasing energy storage density of the energy storage system and reducing construction costs.

As shown in FIG. 1, the second accommodating region 02 includes a first accommodating cavity 021 and a second accommodating cavity 022. The first accommodating cavity 021 and the second accommodating cavity 022 are adjacently arranged in the length direction of the box 10. At least one of a height of the first accommodating cavity 021 or a height of the second accommodating cavity 022 in the height direction of the box 10 is equal to the height of the second accommodating region 02.

As shown in FIG. 1, a length of the first accommodating cavity 021 is greater than a length 22 of the second accommodating cavity in the length direction of the box 10, and a sum of the length of the first accommodating cavity 021 and the length of the second accommodating cavity 022 is equal to the length of the second accommodating region 02 in the length direction of the box 10.

Only the first accommodating cavity 021 and the second accommodating cavity 022 that are longitudinally adjacently arranged are provided in the second accommodating region 02 in the box 10 provided in this application. Compared with a manner in which a plurality of pieces of space are divided by a channel or an interstice in the box for the existing energy storage apparatus, not only space of the second accommodating region 02 can be more fully used, but also arrangement and maintenance work in different cavities is facilitated, thereby reducing working time. For example, the first accommodating cavity 021 is configured to accommodate the battery module, and the second accommodating cavity 022 may be configured to accommodate the power module 40 and the temperature control module 50. Correspondingly, the arrangement or maintenance work for the battery module 20 in the first accommodating cavity and the arrangement or maintenance work for the power module 40 and the temperature control module 50 in the second accommodating cavity may be performed simultaneously without affecting each other, so as to improve arrangement and maintenance efficiency of the energy storage apparatus.

As shown in FIG. 1, the box 10 includes a plurality of battery racks 15. The plurality of battery racks 15 are sequentially arranged at intervals in the length direction of the box 10. Any two adjacent battery racks 15 in the plurality of battery racks 15 have a same spacing in the length direction of the box 10. The first or last battery rack 15 in the plurality of battery racks 15 in the length direction of the box 10 is configured to separate the first accommodating cavity 021 from the second accommodating cavity 022. In this embodiment of this application, the first accommodating region 01 is configured to accommodate the battery module 20, and the second accommodating region 02 is configured to accommodate the power module 40 and the temperature control module 50.

In the box 10 provided in this application, the first accommodating cavity 021 and the second accommodating cavity 022 are separated by the battery rack 15. Compared with a manner in which a plurality of pieces of space are separated by an isolation wall or interstice in the existing energy storage box, space of the second accommodating region 02 can be more fully used, so as to increase a quantity of battery modules that can be accommodated in the box 10. In addition, the first accommodating cavity 021 and the second accommodating cavity 022 are separated by the battery racks 15, and a battery module 20 may be further arranged in the second accommodating cavity 022. For example, the first accommodating cavity 021 is configured to accommodate the battery module 20, and the second accommodating cavity 022 may be configured to accommodate the power module 40 and the temperature control module 50. When the power module 40 and the temperature control module 50 occupy only a part of the second accommodating cavity 022, another part of the second accommodating cavity 022 may alternatively be configured to arrange the battery module 20. Correspondingly, compared with the box for the existing energy storage apparatus, the box provided in this application may accommodate more battery modules 20.

In an embodiment, the box 10 includes a plurality of spacing columns 131, and the plurality of spacing columns 131 are configured to support the partition plate 14 and the external assembly accommodated on the partition plate 14. The plurality of spacing columns 131 are sequentially arranged at intervals in the length direction of the box 10, and the plurality of spacing columns 131 are separately fastened between the bottom plate 11 and the partition plate 14. Each spacing column 131 corresponds to one battery rack 15, and each spacing column 131 overlaps a projection of one battery rack 15 in the width direction of the box 10. For example, the partition plate 14 is configured to accommodate the heat exchange assembly 30 of the energy storage apparatus. In the box provided in this application, the plurality of spacing columns 131 respectively corresponding to the plurality of battery racks 15 are disposed, so that stability of the box 10 can be improved, and the space of the second accommodating region 02 is not occupied.

In an embodiment, the box 10 includes one sealing door 13, and the sealing door 13 is configured to close the first accommodating cavity 021 and the second accommodating cavity 022. The sealing door 13 in the box 10 provided in this application is configured to close the first accommodating cavity 021 and the second accommodating cavity 022. In addition, the open first accommodating region 01 is provided to accommodate the external assembly. Maintenance work on the external assembly does not affect assemblies in the first accommodating cavity 021 and the second accommodating cavity 022 that are closed by the sealing door 13, so that maintenance convenience and a safety protection capability of the energy storage apparatus can be improved.

In an embodiment, the box 10 includes a plurality of sealing doors 13. For example, the box 10 includes at least two sealing doors 13, and the at least two sealing doors 13 are arranged in the length direction of the box 10. One sealing door 13 of the at least two sealing doors 13 is configured to close the second accommodating cavity 022, and another sealing door 13 of the at least two sealing doors 13 is configured to close the first accommodating cavity 021.

In the box 10 provided in this application, longitudinally opened sealing doors 13 are respectively disposed in the first accommodating cavity 021 and the second accommodating cavity 022. The first accommodating cavity 021 and the second accommodating cavity 022 may be separately arranged or maintained. Opening the sealing door 13 of only the first accommodating cavity 021 or the second accommodating cavity 022 does not affect an assembly accommodated in the other accommodating cavity, so that maintenance convenience and a safety protection capability of the energy storage apparatus can be improved.

In this embodiment of this application, lengths, widths, and heights of the box 10 and a standard container are the same. The height of each column 132 is equal to a height of the standard container. It may be understood that the standard container includes a plurality of specifications, and the standard container with each specification has a specific length, width, and height. In this embodiment of this application, a length, a width, and a height of the box 10 correspond to a specification of a length, a width, and a height of one standard container. For example, the length, the width, and the height of the box 10 may be one of a 20-foot standard container, a 40-foot standard container, a 20-foot high cube container, and a 40-foot high cube container. For example, the length of the box is 6058 mm, the width of the box is 2438 mm, and the height of the box is 2438 mm to 4150 mm. The box 10 provided in this application has a same size as the standard container body. This not only facilitates transportation of the energy storage apparatus, but also facilitates stacking or an adjacent arrangement of a plurality of boxes.

In this embodiment of this application, the height of each column 132 is equal to the height of the standard container. In the box 10 provided in this application, the height of the column 132 is equal to the height of the standard container, and the height of the partition plate 14 is less than the height of the column 132, so as to form the recessed first accommodating region 01. Even if the external assembly is accommodated in the first accommodating region 01, an overall height of the energy storage apparatus does not exceed the height of the standard container, so as to ensure standardization of a volume of the energy storage apparatus. In this case, space used for stacking of energy storage apparatuses or an occupied area used for an adjacent arrangement is reduced, so as to increase energy storage density of the energy storage system and reduce construction costs.

In this embodiment of this application, the box 10 includes one or more stiffening beams 133. Each stiffening beam 133 is parallel to the length direction or the width direction of the box 10. Each stiffening beam 133 is configured to fixedly connect to two columns 132. Each stiffening beam 133 is disposed above the partition plate 14 in the height direction of the box 10. In the box provided in this application, the stiffening beam parallel to the length direction or the width direction of the box is disposed, so that overall structural strength of the box is improved, and an assembly, such as the heat exchange assembly, accommodated in the first accommodating region may also be protected by the stiffening beam.

FIG. 2 is another schematic diagram of a box according to an embodiment of this application. As shown in FIG. 2, the stiffening beam 133 parallel to the width direction of the box 10 may also be referred to as a first stiffening beam 134, and the stiffening beam 133 parallel to the length direction of the box 10 may also be referred to as a second stiffening beam 135.

As shown in FIG. 2, two columns 132 in the length direction of the box 10 are fixedly connected by the second stiffening beam 135. For example, the second stiffening beam 135 fixedly connects to the column 132 and the column 132 that are on a same side of a first side plate 121 and a third side plate 123. Specifically, the first stiffening beam 134 and the second stiffening beam 135 are arranged perpendicular with each other, and the first stiffening beam 134 and the second stiffening beam 135 are separately arranged in parallel to the partition plate 14. In a height z direction of the box 10, heights of the first stiffening beam 134 and the second stiffening beam 135 are greater than the height of the partition plate 14. Correspondingly, the four columns 132, the first stiffening beam 134, the second stiffening beam 135, and the partition plate 14 may form the rectangular, recessed, and open first accommodating region 01 on the top of the partition plate 14.

In the box 10 provided in this embodiment of this application, at least one of the first stiffening beam 134 and the second stiffening beam 135 is disposed, so that structural strength and structural stability of the box 10 can be improved, and the external assembly, such as the heat exchange assembly 30, accommodated in the first accommodating region 01 can also be protected.

With reference to FIG. 1 and FIG. 2, the first accommodating region 01 may be an open accommodating region, and a shape of the first accommodating region 01 may be a U-shaped structure or a square frame structure. The heat exchange assembly may be accommodated in the first accommodating region 01, to be disposed in a layer different from a layer of the battery module. In this way, an area occupied by the heat exchange assembly 30 can be reduced, and filling space of the battery module in the second accommodating region 02 can be increased, so as to increase a capacity of the energy storage apparatus.

The structure of the first accommodating region 01 is explained and described above, and a structure of the second accommodating region 02 will be explained and described below. In this embodiment of this application, the second accommodating region 02 is a closed accommodating region formed by the bottom plate 11, the columns 132, the side plates 12, the partition plate 14, and the sealing door 13. The second accommodating region 02 is configured to accommodate electrical assemblies such as the battery module 20, the power module 40, and the temperature control module 50.

The second accommodating region 02 includes the first accommodating cavity 021 and the second accommodating cavity 022. The first accommodating cavity 021 and the second accommodating cavity 022 are adjacently arranged in the length direction of the box 10. The height of the first accommodating cavity 021 and the height of the second accommodating cavity 022 are equal to the height of the second accommodating region 02 in the height direction of the box 10.

With reference to FIG. 2, the second accommodating region 02 may be divided into the first accommodating cavity 021 and the second accommodating cavity 022. The first accommodating cavity 021 and the second accommodating cavity 022 are adjacently arranged in a length x direction of the box 10. The first accommodating cavity 021 is configured to accommodate the battery module 20. The second accommodating cavity 022 is configured to accommodate the power module 40 and the temperature control module 50.

In an embodiment, the first accommodating cavity 021 and the second accommodating cavity 022 may be separated by a baffle plate in the length x direction of the box 10. A through hole is provided in the baffle plate for a cable between the power module 40 and the battery module 20 to run through.

Still refer to FIG. 2. The plurality of battery racks 15 may be disposed in the first accommodating cavity 021. The plurality of battery racks 15 are sequentially adjacently arranged in the length direction of the box 10. Each battery rack 15 may include a plurality of guide rails. When the battery modules 20 are placed, the battery modules may be separately placed on two adjacent battery racks 15 along corresponding guide rails. A depth of the battery module 20 is 1700 mm to 2200 mm.

The second accommodating cavity 022 in the box 10 provided in this embodiment of this application may facilitate prefabricated insertion of the power module 40 and the temperature control module 50. The temperature control module 50 may be accommodated in upper space of the second accommodating cavity 022, and the power module 40 may be accommodated in lower space of the second accommodating cavity 022. The power module 40 and the temperature control module 50 are accommodated up and down to further reduce space occupied in a horizontal plane, and increase assembly space of the battery module 20.

The box 10 provided in this embodiment of this application may provide relatively sealed accommodating space for the electrical assemblies such as the battery module 20, the power module 40, and the temperature control module 50, to protect the battery module 20, and achieve fire-proof, waterproof, and vapor-proof effect.

In this embodiment of this application, a heat exchange pipe needs to be disposed between the heat exchange assembly 30 and the battery module 20 in the first accommodating region 01 to implement heat exchange between the heat exchange assembly 30 and the battery module 20. As shown in FIG. 2, the partition plate 14 includes a first communication hole 141 and a second communication hole 142. The first communication hole 141 is provided above the first accommodating cavity 021, and the second communication hole 142 is provided above the second accommodating cavity 022. For example, the heat exchange pipe for the heat exchange assembly 30 runs through the first communication hole 141 into the first accommodating cavity 021, and a connection cable between the heat exchange assembly 30 and the temperature control module 50 runs through the second communication hole 142.

In an embodiment, the partition plate 14 includes a plurality of first communication holes 141, and each first communication hole 141 corresponds to each first accommodating cavity 021 and is located at a position of the partition plate above the first accommodating cavity 021. A position of each first communication hole 141 and a position of each second communication hole 142 of the partition plate 14 avoid a contact position between each battery rack 15 and the partition plate 14.

Two communication holes of the partition plate 14 in the box 10 provided in this application are separately configured to communicate with assemblies in two accommodating regions, so that communication or maintenance windows of the box 10 can be reduced, thereby improving a safety protection capability of the energy storage apparatus. In an embodiment, the heat exchange assembly 30 uses liquid cooling for heat dissipation. Correspondingly, the heat exchange pipe may be a liquid cooling pipe. The heat exchange pipe between the heat exchange assembly 30 and the battery module 20 may form a circulation loop for a cooling medium between the heat exchanger and the battery module 20. Compared with the box for the existing energy storage apparatus, in the second accommodating cavity in the box 10 provided in this embodiment of this application, internal heat exchange pipes may be reduced, so that more battery modules 20 can be accommodated, and non-cell power consumption costs of the energy storage apparatus are greatly reduced.

In the energy storage apparatus in this embodiment of this application, both the power module 40 and the temperature control module 50 are accommodated in the second accommodating cavity 022. The temperature control module 50 is disposed in upper space of the power module 40 in the height direction of the box 10, so as to electrically connect to the heat exchange assembly 30 in the first accommodating region 01. The heat exchange assembly 30 may be electrically connected to the temperature control module 50 with the connection cable. To implement cabling of the connection cable in the box 10, the second communication hole may be provided in the partition plate 14, and the second communication hole may be provided above the second accommodating cavity 022 for the connection cable to run through. To ensure sealing of the second accommodating cavity 022, sealing is maintained between the cable and a hole wall of the second communication hole.

The following describes a specific connection structure of components of the box with reference to the accompanying drawings.

With reference to FIG. 1, the bottom plate 11 is of a rectangular structure. The bottom plate 11 includes four side edges, which may be respectively denoted as a first side edge, a second side edge, a third side edge, and a fourth side edge. The first side edge and the third side edge are short edges of the bottom plate 11, and the second side edge and the fourth side edge are long edges of the bottom plate 11. The four columns 132 are respectively disposed at four corners of the bottom plate 11, and are fixedly connected to the bottom plate 11.

Two side plates 12 of the three side plates 12 are disposed opposite to each other in the length direction of the box 10, and the other side plate 12 and the sealing door 13 are disposed opposite to each other in the width direction of the box. As shown in FIG. 2, the three side plates 12 may be respectively denoted as the first side plate 121, a second side plate 122, and the third side plate 123. The first side plate 121, the second side plate 122, and the third side plate 123 are respectively disposed in correspondence with the first side edge, the second side edge, and the third side edge of the bottom plate 11. In addition, the first side plate 121, the second side plate 122, and the third side plate 123 are all perpendicularly connected to the bottom plate 11. In addition, the three side plates 12 may be separately connected to the four columns 132.

With reference to FIG. 1, the sealing door 13 is disposed along the fourth side edge of the bottom plate 11, and the sealing door 13 may be perpendicularly connected to the bottom plate 11. The sealing door 13, the bottom plate 11, the partition plate 14, the side plates 12, and the four columns 132 together form the closed second accommodating region 02 through enclosure. The sealing door 13 is disposed on one side of the box 10, so that a single side of the box 10 can be opened. The sealing door 13 may be a double door, a single door, or the like. There may be two, three or more sealing doors 13, and a quantity of sealing doors may be 2, 3, 4, 5, or more. The quantity of sealing doors is not specifically limited herein. The plurality of sealing doors 13 are sequentially arranged in the length direction of the box 10.

The box 10 may further include a loose-leaf connecting piece. When there are two sealing doors 13, each sealing door 13 is connected to a column 132 adjacent to the sealing door 13 through the active connecting piece, to be opened and closed. When there are three or more sealing doors 13, the spacing columns 131 may be disposed between the plurality of sealing doors 13. When the three or more sealing doors 13 are fastened, a sealing door 13 adjacent to one of the columns 132 may be rotatably connected to the column 132 through the loose-leaf connecting piece, and remaining sealing doors 13 may be rotatably connected to the spacing columns 131 through loose-leaf connecting pieces.

The height of each column 132 is greater than the height of the partition plate 14 in the height direction of the box 10. Space above the partition plate 14 may form the first accommodating region 01, and space below the partition plate 14 may form the second accommodating region 02. The height of the first accommodating region 01 is less than the height of the second accommodating region 02.

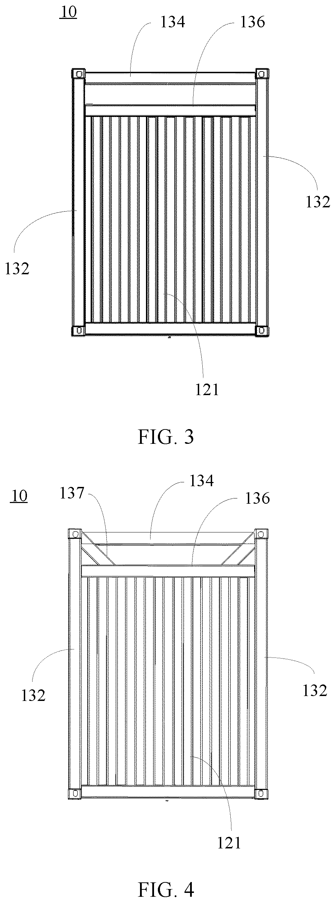

FIG. 3 is another schematic diagram of a box according to an embodiment of this application. As shown in FIG. 3, in an embodiment, the first side plate 121 may be disposed between two columns 132 and is fixedly connected to the columns 132. The height of the first side plate 121 may be flush with the partition plate 14. A plurality of first stiffening beams 134 disposed in the width direction of the box 10 may be disposed between the two columns 132 on the upper part of the first side plate 121.

It may be understood that the third side plate 123 and the first side plate 121 are disposed opposite to each other. A plurality of first stiffening beams 134 disposed in the width direction of the box 10 may be disposed between two columns 132 on the upper part of the third side plate 123, and details are not described again. It may be understood that, one or more second stiffening beams 135 disposed in the length direction of the box 10 may also be disposed between two columns 132 on the upper part of the second side plate 122, and details are not described again.

In the height z direction of the box 10, the top of the column 132 is higher than the partition plate 14. The first stiffening beams 134 and/or the second stiffening beams 135, the four columns 132, and the partition plate 14 may form the first accommodating region 01 above the partition plate 14 through enclosure.

In an embodiment, a plate body of the first side plate 121 and the third side plate 123 form a hollow-out structure in space below the partition plate 14, and one side of the first side plate 121 and one side of the third side plate 123 may form a hollow-out structure in space above the partition plate 14, so as to facilitate disposition of an air inlet of the heat exchange assembly 30 and facilitate circulation of a heat exchange airflow.

In an embodiment, the box 10 includes one or more beams 136. As shown in FIG. 3, one beam 136 fixedly communicates with two columns 132 in the width direction of the box 10. The first side plate 121 is fixedly connected to one beam 136 and two columns 132. It may be understood that the third side plate 123 and the first side plate 121 are disposed opposite to each other. One or more beams 136 that are fixedly connected in the width direction of the box 10 may also be disposed between two columns 132 connected to the third side plate 123, and details are not described again. It may be understood that one or more beams 136 that are fixedly connected in the length direction of the box 10 may also be disposed between two columns 132 connected to the second side plate 122, and details are not described again. Correspondingly, in the box 10 provided in this application, stability of the side plates may be enhanced through one or more beams 136, so as to improve structural stability of the box 10.

FIG. 4 is another schematic diagram of a box according to an embodiment of this application. As shown in FIG. 4, an auxiliary stiffening beam 137 may be disposed between one column 132 and one of the beams 136. In this case, the auxiliary stiffening beam 137 may be disposed obliquely, and triangular support may be formed between the auxiliary stiffening beam 137 and the column 132 and the beam 136 that are connected to the auxiliary stiffening beam 137, so as to further improve structural stability of the box 10.

The first side plate 121 and the third side plate 123 have a same structure. In the box formed by the first side plate 121 and the third side plate 123 of the structure shown in FIG. 3 or FIG. 4, the open first accommodating region 01 having the U-shaped structure may be formed.

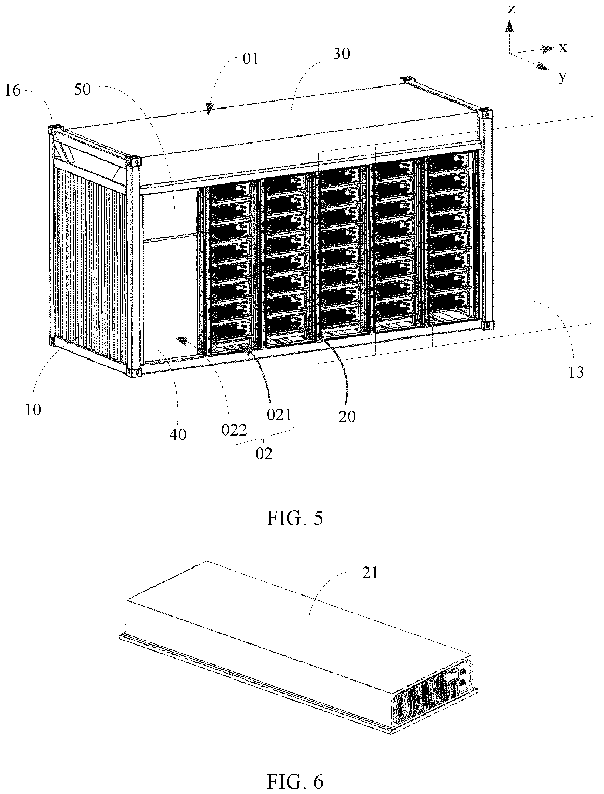

FIG. 5 is a schematic diagram of an energy storage apparatus according to an embodiment of this application. As shown in FIG. 5, the energy storage apparatus includes the box 10, the electrical assembly, and the heat exchange assembly 30. The box 10 includes the open first accommodating region 01 and the closed second accommodating region 02. The electrical assembly includes the plurality of battery modules 20, the power module 40, and the temperature control module 50. The first accommodating region 01 is configured to accommodate the heat exchange assembly 30, and the second accommodating region 02 is configured to accommodate the electrical assembly. In the height direction of the box 10, the first accommodating region 01 is located above the second accommodating region 02, the height of the first accommodating region 01 is less than the height of the second accommodating region 02, and the height of the heat exchange assembly 30 is less than or equal to the height of the first accommodating region 01.

In the energy storage apparatus in this application, the open first accommodating region 01 is used to accommodate the heat exchange assembly 30 having a relatively small size, and the closed second accommodating region 02 is used to accommodate the electrical assembly, so that impact of heat of the heat exchange assembly 30 on the electrical assembly is alleviated, thereby improving heat dissipation performance of the energy storage apparatus. In addition, in the energy storage apparatus provided in this application, the electrical assembly is accommodated in the closed second accommodating region 02, so that communication or maintenance windows that need to be provided in the box 10 can be reduced, thereby improving a safety protection capability of the energy storage apparatus. In addition, in the energy storage apparatus provided in this application, the recessed open first accommodating region 01 is provided to accommodate the heat exchange assembly 30. This not only facilitates external disposition of the heat exchange assembly 30, but also can ensure standardization of an overall size of the energy storage apparatus, and facilitates reducing space used for stacking of a plurality of energy storage apparatuses or an occupied area used for an adjacent arrangement, thereby increasing energy storage density of the energy storage system and reducing construction costs of the energy storage system.

In this embodiment of this application, the energy storage apparatus includes a plurality of columns of battery modules 20. Each column of battery modules 20 includes a plurality of battery modules 20. The plurality of battery modules 20 in each column of battery modules 20 are arranged in the first accommodating cavity 021 in a stacked manner in the height direction of the box 10. As shown in FIG. 5, the electrical assembly includes the plurality of battery modules 20. The plurality of battery modules 20 are divided into a plurality of columns and arranged in the first accommodating cavity 021 in a stacked manner in the height direction of the box 10. In the energy storage apparatus provided in this application, the plurality of battery modules 20 are arranged in the first accommodating cavity 021 in a centralized manner, so that space of the first accommodating cavity 021 can be more fully used, a prefabrication rate of the energy storage apparatus can be improved, and the maintenance work for the battery module 20 is facilitated.

FIG. 6 is a schematic diagram of a structure of a battery module. As shown in FIG. 6, each battery module 20 is of a cuboid structure. Each battery module 20 is inserted into the battery rack 15. The battery module 20 is inserted in the width direction of the box 10. For example, the y direction is the width direction of the box 10. A length of the battery module 20 in the width of the box 10 is 1.7 m to 2.2 m. With reference to both FIG. 5 and FIG. 6, the plurality of battery modules 20 are divided into the plurality of columns and arranged in the battery racks 15 in the first accommodating cavity 021 in a stacked manner. The box 10 includes a plurality of sealing doors 13. Each column of battery modules 20 corresponds to one sealing door 13, so as to facilitate placement and maintenance of each column of battery modules 20. The battery rack 15 is fixedly connected to the spacing column 131, so as to improve stability of the battery rack 15.

As shown in FIG. 5, the electrical assembly further includes the power module 40 and the temperature control module 50. The power module 40 and the temperature control module 50 are arranged in the second accommodating cavity 022 in a stacked manner in the height direction of the box 10. In the energy storage apparatus in this application, the power module 40 and the temperature control module 50 are arranged in the second accommodating cavity 022 in a centralized manner, so that space of the second accommodating cavity 022 can be more fully used, a prefabrication rate of the energy storage apparatus can be improved, and maintenance work for the power module 40 and the temperature control module 50 is facilitated.

As shown in FIG. 5, a distance between an upper surface of the heat exchange assembly 30 in the height direction of the box 10 and a bottom of the box 10 is equal to or less than the height of the box 10. A distance between the upper surface of the housing of the heat exchange assembly 30 in the height direction of the box 10 and the partition plate 14 is equal to or less than the height of the first accommodating region 01, a distance between two side surfaces of the housing of the heat exchange assembly 30 in the width direction of the box 10 is equal to or less than the width of the first accommodating region 01, and a distance between two side surfaces of the housing of the heat exchange assembly 30 in the length direction of the box 10 is equal to or less than the length of the first accommodating region 01. Alternatively, the distance between the upper surface of the housing of the heat exchange assembly 30 in the height direction of the box 10 and the bottom of the box 10 is equal to or less than the height of the box 10.

In the energy storage apparatus provided in this application, the recessed open first accommodating region 01 is provided to accommodate the heat exchange assembly 30. This not only facilitates external disposition of the heat exchange assembly 30, but also can ensure that the heat exchange assembly 30 is not exposed beyond an outer side or an upper side of the energy storage apparatus, and facilitates reducing space used for stacking of a plurality of energy storage apparatuses or an occupied area used for an adjacent arrangement, thereby increasing energy storage density of the energy storage system and reducing construction costs.

It may be understood that, in addition to the battery modules 20, the heat exchange assembly 30, the power module 40, and the temperature control module 50, the electrical assembly of the energy storage apparatus in this application may further include electronic circuit modules such as a communication module and a firefighting module. The electronic circuit modules such as the communication module and the firefighting module may be disposed in the second accommodating region 02 in a manner of being stacked with the power module 40 and the temperature control module 50, so as to implement a fire-proof, waterproof, and vapor-proof protection function, and improve an integration level of the energy storage apparatus.

In an embodiment, to facilitate transportation and protect the box 10 from being scratched during transportation, a corner fitting structure 16 may be disposed at a corner of the box 10.

The heat exchange assembly 30 of the energy storage apparatus provided in this embodiment of this application includes a housing 31, a cooling module 32, and a heat exchange plate 33. The housing 31 is configured to accommodate the cooling module 32 and the heat exchange plate 33. The housing 31 includes a bottom, a top 311, and side parts 312 and 313 disposed between the bottom and the top 311. The cooling module 32 may be placed between an air intake vent 34 and the heat exchange plate 33, or may be placed between an air exhaust vent 35 and the heat exchange plate 33.

The heat exchange assembly 30 of the energy storage apparatus provided in this embodiment of this application includes the air intake vent 34 and the air exhaust vent 35. The air intake vent 34 and the air exhaust vent 35 of the heat exchange assembly 30 may be disposed at one or more of the side part 312 of the housing 31 or the top 311 of the housing 31. The heat exchange plate 33 is disposed between the air intake vent 34 and the air exhaust vent 35. The heat exchange plate 33 may be disposed obliquely relative to the partition plate 14 or parallel to the partition plate 14.

In an embodiment, the heat exchange assembly 30 may be a prefabricated cuboid assembly. The cooling module 32 may adopt at least one of air cooling and liquid cooling.

The heat exchange assembly 30 of the energy storage apparatus provided in this embodiment of this application is accommodated in the first accommodating region 01 of the box 10, and the bottom of the housing 31 of the heat exchange assembly 30 is in contact with the partition plate 14 of the box 10.

In an embodiment, the air intake vent 34 and the air exhaust vent 35 of the heat exchange assembly 30 are oriented toward the height direction of the box 10. The heat exchange plate 33 and the partition plate 14 are arranged in parallel.

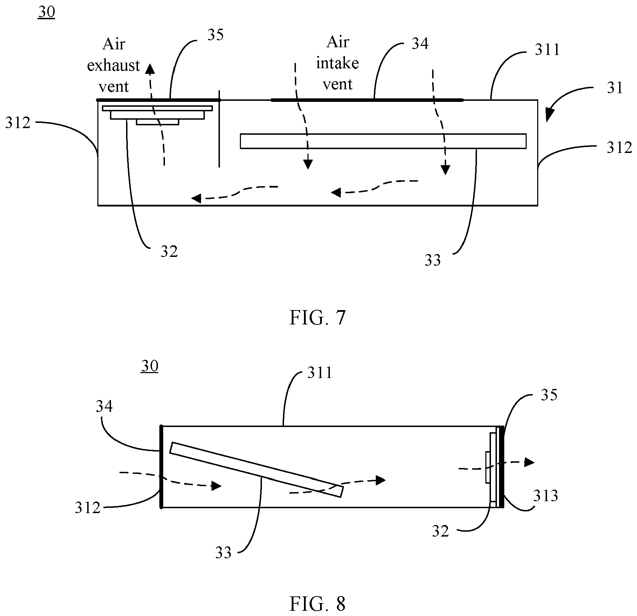

FIG. 7 is a schematic diagram of a heat exchange assembly in an energy storage apparatus according to an embodiment of this application. As shown in FIG. 7, the air intake vent 34 and the air exhaust vent 35 are disposed on the top 311 of the housing 31. The heat exchange plate 33 and the partition plate 14 are disposed in parallel. Cold air enters the interior of the housing 31 from the air intake vent 34, flows through the heat exchange plate 33 to the air exhaust vent 35, and flows out from the air exhaust vent 35.

In an embodiment, the air intake vent 34 and the air exhaust vent 35 of the heat exchange assembly 30 are oriented toward the width direction or the length direction of the box 10. The heat exchange plate 33 is arranged obliquely relative to the partition plate 14. The heat exchange plate 33 is disposed obliquely relative to the partition plate 14, so as to increase a heat exchange area and improve heat exchange efficiency.

FIG. 8 is a schematic diagram of another heat exchange assembly in an energy storage apparatus according to an embodiment of this application. As shown in FIG. 8, the air intake vent 34 is provided in the side part 312 of the housing 31, and the air exhaust vent 35 is provided in the side part 313 of the housing 31. The heat exchange plate 33 is arranged obliquely relative to the partition plate 14. Cold air enters the interior of the housing 31 from the air intake vent 34, flows through the heat exchange plate 33 to the air exhaust vent 35, and flows out from the air exhaust vent 35.

In the heat exchange assembly 30 of the energy storage apparatus provided in this application, orientations of the air intake vent 34 and the air exhaust vent 35 of the heat exchange assembly 30 may be flexibly set based on a requirement of stacking or an adjacent arrangement of energy storage apparatuses, so as to facilitate box combination assembly of the energy storage apparatuses. In addition, in the heat exchange assembly 30 of the energy storage apparatus provided in this application, an arrangement manner of the heat exchange plate 33 and the partition plate 14 may be correspondingly set based on the orientations of the air intake vent 34 and the air exhaust vent 35, so as to improve heat dissipation capabilities of a single energy storage apparatus and an entire energy storage system.

This application further provides an energy storage system. The energy storage system includes a plurality of energy storage apparatuses described above. The plurality of energy storage apparatuses are arranged in a stacked manner in the height direction of the box 10 for the energy storage apparatus, or boxes for the plurality of energy storage apparatuses are adjacently arranged in the length direction or the width direction of the box 10.

In an embodiment, the air exhaust vent and the air intake vent of the heat exchange assembly 30 are oriented toward the width direction or the length direction of the box 10 for the energy storage apparatus. The plurality of energy storage apparatuses are arranged in a stacked manner in the height direction of the box 10 for the energy storage apparatus. An interstice between boxes 10 for two adjacent energy storage apparatuses is less than a length, a height, or a width of the heat exchange assembly 30. The air intake vent 34 and the air exhaust vent 35 of the heat exchange assembly 30 are provided in the side part 312 of the housing 31 in the length direction or the width direction of the box 10 for the energy storage apparatus. The heat exchange plate 33 is arranged obliquely relative to the partition plate 14.

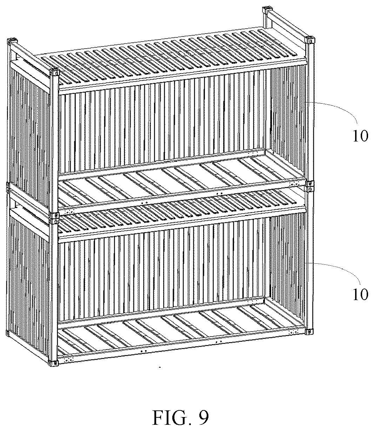

FIG. 9 is a schematic diagram of an energy storage system according to an embodiment of this application. As shown in FIG. 9, the energy storage system includes two energy storage apparatuses described above, and boxes 10 for the two energy storage apparatuses are arranged in a stacked manner in the height direction of the box 10. An interstice between the boxes 10 for the two adjacent energy storage apparatuses is less than the height of the heat exchange assembly 30. The air intake vent 34 and the air exhaust vent 35 of the heat exchange assembly 30 are provided in the side surfaces 312 and 313 of the housing 31 in the width direction of the box 10 for the energy storage apparatus. The heat exchange plate 33 and the partition plate 14 are disposed in parallel. Parts, other than the box 10, of the energy storage apparatus are not shown in FIG. 9. For the heat exchange assembly 30, refer to FIG. 8. For other parts that are not shown, refer to FIG. 1 to FIG. 5.

In an embodiment, the air intake vent 34 and the air exhaust vent 35 of the heat exchange assembly 30 of each energy storage apparatus are oriented toward the height direction of the box 10 for the energy storage apparatus, and the boxes for the plurality of energy storage apparatuses are adjacently arranged in the length direction or the width direction of the box 10. An interstice between boxes 10 for two adjacent energy storage apparatuses is less than the length or the width of the heat exchange assembly 30. The air intake vent 34 and the air exhaust vent 35 of the heat exchange assembly 30 are provided in the top 311 of the housing 31 in the height direction of the box 10 for the energy storage apparatus. The heat exchange plate 33 and the partition plate 14 are disposed in parallel. For the heat exchange assembly 30, refer to FIG. 7. For other parts that are not shown, refer to FIG. 1 to FIG. 5.

In the energy storage system provided in this application, the plurality of energy storage apparatuses use a recessed open first accommodating region to accommodate the heat exchange assembly, so that it can be ensured that the heat exchange assembly is not exposed beyond an outer side or an upper side of the energy storage apparatus, thereby reducing an interstice used for two or more energy storage apparatuses that are arranged in a stacked manner or adjacently, reducing space or an occupied area used for the energy storage system, increasing energy storage density of the energy storage system, and reducing construction costs.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A box for an energy storage apparatus, wherein the box comprises four columns, three side plates, a partition plate, a bottom plate, and a sealing door, the partition plate and the bottom plate are disposed opposite to each other in a height direction of the box, two of the side plates are disposed opposite to each other in a length direction of the box, and the other side plate and the sealing door are disposed opposite to each other in a width direction of the box, wherein
the four columns and the partition plate form an open first accommodating region through enclosure, the three side plates, the partition plate, and the bottom plate are fastened by the four columns and form a closed second accommodating region with the sealing door through enclosure, and the first accommodating region and the second accommodating region are arranged in a stacked manner in the height direction of the box; and
in the length direction of the box, a length of the first accommodating region or the second accommodating region is equal to a distance between the two side plates that are disposed opposite to each other in the length direction of the box, and in the height direction of the box, a distance between the partition plate and the bottom plate is less than a height of each of the columns.

2. The box according to claim 1, wherein the second accommodating region comprises a first accommodating cavity and a second accommodating cavity, the first accommodating cavity and the second accommodating cavity are adjacently arranged in the length direction of the box, and at least one of a height of the first accommodating cavity or a height of the second accommodating cavity is equal to a height of the second accommodating region in the height direction of the box.

3. The box according to claim 2, wherein a length of the first accommodating cavity is greater than a length of the second accommodating cavity in the length direction of the box, and a sum of the length of the first accommodating cavity and the length of the second accommodating cavity is equal to a length of the second accommodating region in the length direction of the box.

4. The box according to claim 2, wherein the box comprises a plurality of battery racks, the plurality of battery racks are sequentially adjacently arranged in the length direction of the box, any two adjacent battery racks in the plurality of battery racks have a same spacing in the length direction of the box, and the first or last battery rack in the plurality of battery racks in the length direction of the box is configured to separate the first accommodating cavity from the second accommodating cavity.

5. The box according to claim 2, wherein the box comprises at least two sealing doors, and the at least two sealing doors are arranged in the length direction of the box, wherein
one sealing door of the at least two sealing doors is configured to close the second accommodating cavity; and
another sealing door of the at least two sealing doors is configured to close the first accommodating cavity.

6. The box according to claim 1, wherein the box has a same length, width, and height as a standard container.

7. The box according to claim 1, wherein the height of each of the columns is equal to a height of a standard container.

8. The box according to claim 1, wherein the box comprises one or more stiffening beams, each of the stiffening beams is parallel to the length direction or the width direction of the box, each of the stiffening beams is configured to fixedly connect to two of the columns, and each of the stiffening beams is disposed above the partition plate in the height direction of the box.

9. An energy storage apparatus, wherein the energy storage apparatus comprises a heat exchange assembly, an electrical assembly, and the box according to any one of claims 1 to 8, the first accommodating region is configured to accommodate the heat exchange assembly, and the second accommodating region is configured to accommodate the electrical assembly, wherein
the first accommodating region is located above the second accommodating region in a height direction of the box, and a height of the first accommodating region is less than a height of the second accommodating region, and a height of the heat exchange assembly is less than or equal to the height of the first accommodating region in the height direction of the box.

10. The energy storage apparatus according to claim 9, wherein the electrical assembly comprises a plurality of columns of battery modules, each column of battery modules comprises the plurality of battery modules, and the plurality of battery modules in each column of battery modules are arranged in the first accommodating cavity in a stacked manner in the height direction of the box.

11. The energy storage apparatus according to claim 9, wherein the electrical assembly comprises a power module and a temperature control module, and the power module and the temperature control module are arranged in the second accommodating cavity in a stacked manner in the height direction of the box.

12. The energy storage apparatus according to claim 11, wherein the partition plate comprises a first communication hole and a second communication hole, wherein
the first communication hole is provided above the first accommodating cavity, and a heat exchange pipe of the heat exchange assembly runs through the first communication hole into the first accommodating cavity; and
the second communication hole is provided above the second accommodating cavity, and a connection cable between the heat exchange assembly and the temperature control module runs through the second communication hole.

13. The energy storage apparatus according to claim 9, wherein a distance between an upper surface of a housing of the heat exchange assembly in the height direction of the box and the partition plate is equal to or less than the height of the first accommodating region, a distance between two side surfaces of the housing of the heat exchange assembly in a width direction of the box is equal to or less than a width of the first accommodating region, and a distance between two side surfaces of the housing of the heat exchange assembly in a length direction of the box is equal to or less than a length of the first accommodating region.

14. An energy storage system, wherein the energy storage system comprises a plurality of energy storage apparatuses according to any one of claims 9 to 13, and the heat exchange assembly in each of the energy storage apparatuses comprises an air exhaust vent and an air intake vent, wherein
the air exhaust vent and the air intake vent of the heat exchange assembly are oriented toward a height direction of a box for the energy storage apparatus, the plurality of energy storage apparatuses are adjacently arranged in a length direction or a width direction of the box for the energy storage apparatus, and an interstice between boxes for two adjacent energy storage apparatuses is less than a length, a height, or a width of the heat exchange assembly; or
the air exhaust vent and the air intake vent of the heat exchange assembly are oriented toward a width direction or a length direction of a box for the energy storage apparatus, the plurality of energy storage apparatuses are arranged in a stacked manner along a height direction of the box for the energy storage apparatus, and an interstice between boxes for two adjacent energy storage apparatuses is less than a length, a height, or a width of the heat exchange assembly.

15. The energy storage system according to claim 14, wherein the heat exchange assembly comprises a housing and a heat exchange plate, and the housing is configured to accommodate the heat exchange plate, wherein
the air intake vent is provided on a side part of the housing in the length direction or the width direction of the box for the energy storage apparatus, and the heat exchange plate and the partition plate are disposed in an inclined manner; or
the air intake vent is provided on the top of the housing in the height direction of the box for the energy storage apparatus, and the heat exchange plate and the partition plate are disposed in parallel.
